**Europäisches Patentamt**

(19) **European Patent Office**

**Office européen des brevets**

(11) Veröffentlichungsnummer: **0 103 900**
**B1**

(12) **EUROPÄISCHE PATENTSCHRIFT**

(45) Veröffentlichungstag der Patentschrift:
**10.12.86**

(21) Anmeldenummer: **83109407.3**

(22) Anmeldetag: **21.09.83**

(51) Int. Cl.⁴: **B 01 J 2/16,** B 01 J 8/38,
B 01 F 13/02, A 23 G 3/20,
A 23 P 1/00, A 61 J 3/00

(54) **Fliessbettapparatur.**

(30) Priorität: **21.09.82 DE 3234911**

(43) Veröffentlichungstag der Anmeldung:
**28.03.84 Patentblatt 84/13**

(45) Bekanntmachung des Hinweises auf die Patenterteilung:
**10.12.86 Patentblatt 86/50**

(84) Benannte Vertragsstaaten:
**AT CH DE FR GB IT LI**

(56) Entgegenhaltungen:
**DE - C - 872 928**
**DE - C - 960 821**
**US - A - 2 674 498**
**US - A - 2 708 142**

(73) Patentinhaber: **Hüttlin, Herbert, Lörracher Strasse 14,**
**D-7853 Steinen (DE)**

(72) Erfinder: **Hüttlin, Herbert, Lörracher Strasse 14,**
**D-7853 Steinen (DE)**

(74) Vertreter: **Wuesthoff, Franz, Dr.-Ing. et al, Patentanwälte**
**Wuesthoff -v. Pechmann-Behrens-Goetz**
**Schweigerstrasse 2, D-8000 München 90 (DE)**

ACTORUM AG

## Beschreibung

Die Erfindung betrifft eine Fliessbettapparatur zum Mischen, Trocknen, Granulieren, Pelletieren, Lackieren und/oder Dragieren pulvrigen oder körnigen Gutes mit

– einem Behälter, der in bezug auf eine zumindest annähernd senkrechte Behälterachse zumindest annähernd rotationssymmetrisch ist,

– einem Tauchrohr, das von oben her axial in den Behälter hineinragt und an eine Quelle für ein Gas anschliessbar ist,

– einer Schüssel, die unterhalb des Tauchrohrs angeordnet ist und das durch das Tauchrohr eintretende Gas nach oben umlenkt, um das Gut im Behälter zu bewegen, insbesondere zu fluidisieren,

– einem Abweisschirm, der in einem oberen Bereich des Behälters zumindest annähernd rotationssymmetrisch rings um das Tauchrohr angeordnet ist, um das vom Gas nach oben mitgenommene Gut nach aussen umzulenken,

– und einem Gasauslass, der oberhalb des Abweisschirms angeordnet ist.

Bei einer bekannten Fliessbettapparatur dieser Gattung (DE-C 872 928) ist der Abweisschirm als kreisförmige, im wesentlichen ebene Prallplatte ausgebildet, deren äusserer Rand schräg nach unten abgekantet und der Wand des Behälters derart benachbart ist, dass zwischen beiden ein Ringspalt freibleibt. Das vom Gasstrom rings um das Tauchrohr nach oben mitgerissene Gut soll vom Abweisschirm fontänenartig aus dem Zentrum nach allen Seiten verteilt werden, so dass es sich wieder im Behälter ablagert, ohne einen besonderen Schüttkegelraum zu brauchen. Das Gas strömt um den äusseren Rand des Abweisschirms herum durch den Ringspalt nach oben zum Ansaugstutzen eines Gebläses, von dem es durch das Tauchrohr hindurch erneut in den Behälter gedrückt wird.

Mit diesem bekannten Abweisschirm lässt sich die angestrebte gleichmässige Ablagerung des Gutes kaum erzielen; erst recht ist eine gründliche und zugleich schonende Umwälzung des Gutes, wenn überhaupt, nur bei besonders leicht bewegbarem Gut möglich. Wenn nämlich ein kräftiger Gasstrom erzeugt wird, um spezifisch schweres Gut entlang der Aussenwand des Tauchrohrs nach oben zu fördern, dann prallt das Gut mit erheblicher Energie gegen den Abweisschirm, wodurch es in unerwünschter Weise verändert werden kann. Im Ringspalt zwischen dem äusseren Rand des Abweisschirms und der Behälterwand bildet sich eine entsprechend starke Gasströmung, die kleinere Partikel des Gutes in erheblichen Mengen mitreissen kann. Versucht man diese unerwünschten Wirkungen eines starken Gasstromes zu vermeiden, indem man das Gas langsamer strömen lässt, so wird rasch ein Zustand erreicht, bei dem vor allem schwierig zu behandelndes Gut nicht mehr in ausreichendem Mass nach oben gefördert wird, so dass eine gleichmässige und rasche Behandlung des Gutes nicht mehr möglich ist.

Zum Abfangen von Teilchen eines als Katalysator verwendeten Stoffs in einem Behälter eines pneumatischen Förderers ist es ferner bekannt (US-A- 2 708 142) im Behälter mit Abstand oberhalb eines von unten senkrecht einmündenden Gaszuführrohrs und unterhalb eines Gasauslasses einen siebartigen Abweisschirm anzuordnen. Die Katalysatorteilchen prallen im Betrieb ungefähr rechtwinklig gegen den Abweisschirm, wodurch sie ihre Bewegungsenergie verlieren und in den unteren Teil des Behälters zurückfallen. Eine schonende und gleichmässige Umwälzung der Teilchen ist dabei nicht möglich.

Der Erfindung liegt deshalb die Aufgabe zugrunde, eine Fliessbettapparatur der beschriebenen Gattung derart weiterzubilden, dass sie eine schonende und zugleich rasche und gleichmässige Behandlung der verschiedensten Arten pulvrigen oder körnigen Gutes ermöglicht.

Die Aufgabe ist erfindungsgemäss dadurch gelöst, – dass der Abweisschirm ein Gewölbe mit kreisförmigem Scheitel bildet, dessen Scheiteldurchmesser zumindest annähernd dem Mittelwert zwischen den Durchmessern des Tauchrohrs und des oberen Behälterrandes entspricht, und – dass der Abweisschirm Gasdurchlässe in Form länglicher Aussparungen mit je einer zumindest annähernd radialen Längsachse aufweist.

Damit wird erreicht, dass der Gasstrom, der das Gut entlang dem Tauchrohr nach oben gefördert hat, sich allmählich von dem Gut trennt, da das Gas durch die länglichen Aussparungen des Abweisschirms hindurch nach oben strömen kann und somit nicht gezwungen ist, bis in den Bereich der äusseren Behälterwand und dort mit verhältnismässig grosser Geschwindigkeit durch einen Ringspalt nach oben zu strömen. Die länglichen Aussparungen des Abweisschirms werden vom Gas mit mässiger Geschwindigkeit durchströmt, wobei das Gut aber zurückgehalten wird, ohne vom Abweisschirm beschädigt zu werden. Das allmählich nach oben abströmende Gas hat nur noch eine so geringe Strömungsgeschwindigkeit, dass es nicht imstande ist, grössere Mengen staubartiger Partikel des Gutes nach oben aus dem vom Abweisschirm begrenzten Behandlungsraum des Behälters herauszutragen.

Die Aussparungen können je einen Siebeinsatz enthalten, der entlang der Längsachse der Aussparung V-förmig abgekantet ist. Die Siebeinsätze könnten zwar auch so gestaltet sein, dass der gesamte Abweisschirm ein im wesentlichen glattes Gewölbe bildet; Siebeinsätze mit V-förmigem Querschnitt haben jedoch den Vorteil, dass ihre wirksame Fläche grösser ist als die Fläche der zugehörigen Aussparung. Die durch solche Siebeinsätze vergrösserte Fläche ermöglicht es dem Gas, mit besonders geringer Geschwindigkeit aus dem Behandlungsraum der Fliessbettapparatur nach oben abzuströmen.

Vor allem dann, wenn die Aussparungen nicht mit Siebeinsätzen versehen sind, ist zweckmässigerweise jede der Aussparungen durch eine nach unten ragende Schürze begrenzt.

Nahe der Längsachse jeder der Aussparungen des Abweisschirms endet vorzugsweise eine Lamelle, die sich am Tauchrohr entlang nach oben erstreckt, um das nach oben strömende Gut in die zwischen den Aussparungen liegenden Bereiche des Abweisschirms zu lenken. Solche Lamellen verhindern, dass einzelne Teile des Gutes gegen die Kanten der Siebeinsätze prallen, sofern solche vorhanden sind. Die Lamellen können auch so gestaltet sein, dass sie das Gut vollständig aus dem Bereich der Aussparungen des Abweisschirms ablenken, so dass Siebeinsätze in den Aussparungen entbehrlich sind.

Vorzugsweise haben die Lamellen eine längs des Tauchrohrs von unten nach oben allmählich zunehmende radiale Ausdehnung. Damit wird erreicht, dass die Lamellen allmählich beginnen, das längs des Tauchrohrs nach oben strömende Gut zu führen, ohne dass das Gut Gelegenheit hat, gegen die Lamellen zu prallen.

Wenn die Lamellen gewendet sind, hat dies den zusätzlichen Vorteil, dass die Umwälzung und gründliche Durchmischung des Gutes weiter verbessert wird.

Ausführungsbeispiele der Erfindung werden im folgenden anhand schematischer Zeichnungen mit weiteren Einzelheiten erläutert. Es zeigt:

Fig. 1 Teile einer erfindungsgemässen Fliessbettapparatur in axialem Schnitt,

Fig. 2 eine Baugruppe aus Fig. 1, ebenfalls in axialem Schnitt,

Fig. 3 die zu Fig. 2 gehörige Draufsicht,

Fig. 4 die Baugruppe gemäss Fig. 2 in ergänzter Seitenansicht, wobei in Fig. 1–4 jeweils rechts und links zwei verschiedene Ausführungsbeispiele dargestellt sind, und

Fig. 5 den Schnitt V–V in Fig. 4.

Die dargestellte Fliessbettapparatur hat einen kreisförmigen Behälter 10 aus Glas, der in bezug auf eine senkrechte Behälterachse A rotationssymmetrisch gestaltet und aus einem Unterteil 12 sowie einem Oberteil 14 zusammengesetzt ist. Das Unterteil 12 mündet unten ohne Absatz oder Stufe in eine Schlüssel 16, die in bezug auf die Behälterachse A ebenfalls rotationssymmetrisch ausgebildet ist. Oben endet das Unterteil 12 an einem waagerechten oberen Behälterrand 22, an dem es mit dem Oberteil 14 dicht verbunden ist.

Am Oberteil 14 ist ein Tauchrohr 40 aufgehängt, das in die Schlüssel 16 eintaucht und mit deren im wesentlichen zylindrischer Wand 44 einen Ringraum 45 begrenzt. Die Schlüssel 16 hat einen mittleren Bodenbereich, der eine axial nach oben ragende Spitze 48 aufweist.

Am Tauchrohr 40 ist etwa in Höhe des Behälterrandes 22 ein pilzförmiger Abweisschirm 56 befestigt; der aus nichtrostendem Stahlblech besteht und sich über den gesamten Raum zwischen dem Tauchrohr 40 und dem Behälterrand 22 erstreckt, wo der äussere Rand des Abweisschirms 56 zwischen Unterteil 12 und Oberteil 14 des Behälters 10 eingespannt ist. Dieser Abweisschirm 56 bildet ein im Radialschnitt halbkreisförmiges Gewölbe. Der kreisbogenförmige Scheitelkreis 57 des Gewölbes hat einen Durchmesser, der etwa dem Mittelwert zwischen dem Innendurchmesser und dem Aussendurchmesser des Abweisschirms 56 entspricht. In dieses Gewölbe sind in radialer Richtung langgestreckte Aussparungen 90 eingeschnitten. Verbindet man die radial inneren und äusseren Enden jeder Aussparung 90, so ergibt sich eine radiale Längsachse 92. Die Längsachsen 92 sämtlicher Aussparungen 90 liegen in einer gemeinsamen, waagerechten Ebene.

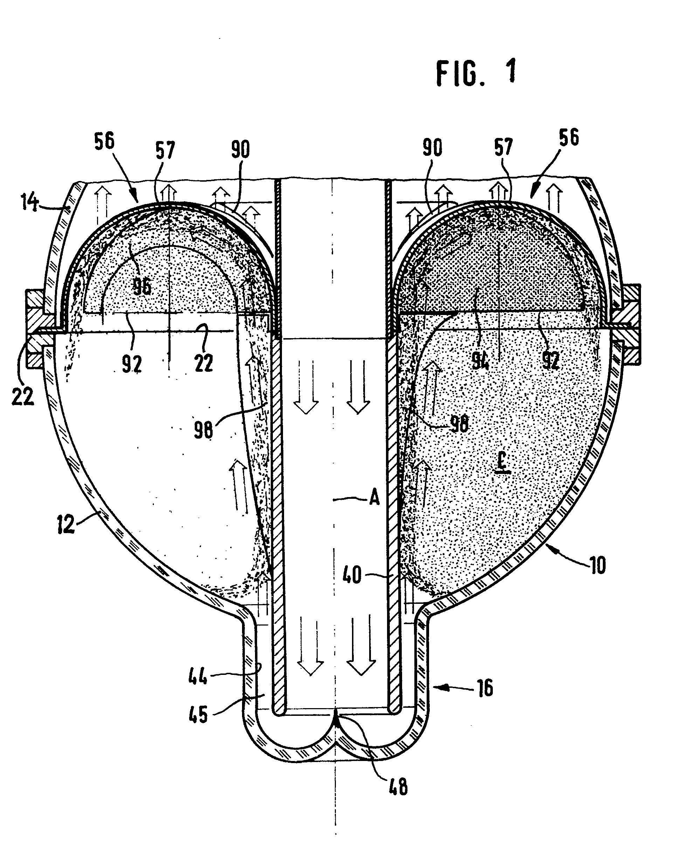

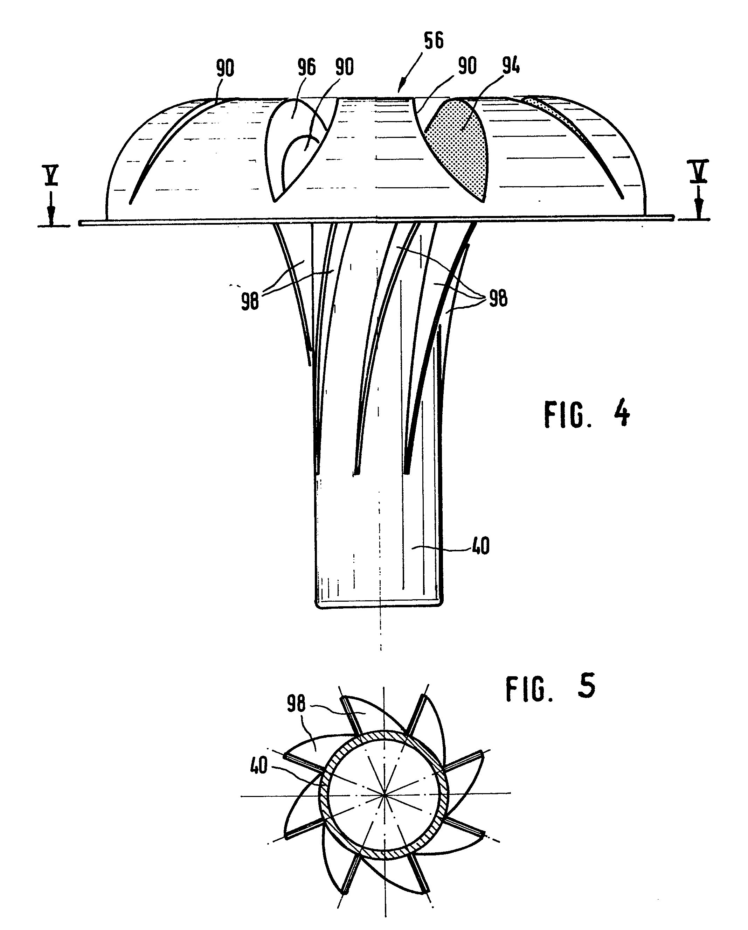

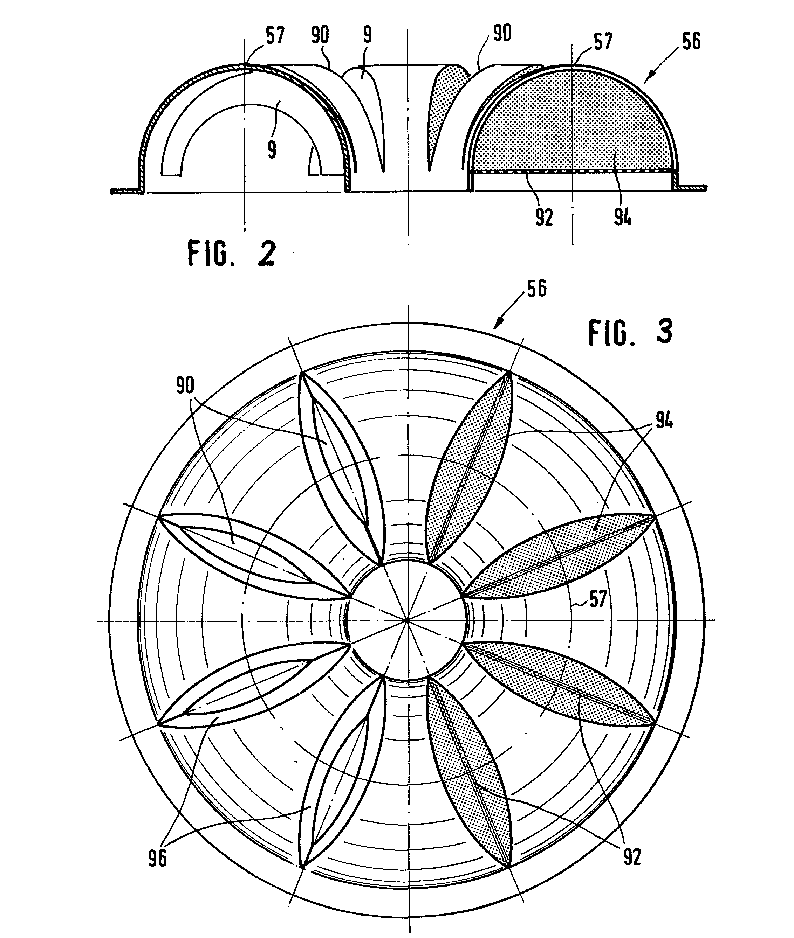

Bei den in der rechten Hälfte der Fig. 1 bis 4 dargestellten Ausführungsbeispiel enthält jede der Aussparungen 90 einen Siebeinsatz 94, der mit den Rändern der Aussparung dicht verbunden und entlang der Längsachse 92 V-förmig abgekantet ist. Der von jedem Siebeinsatz 94 umschlossene, nach oben hin offene Raum hat etwa die Form eines Apfelsinenschnitzes. Bei dem in der linken Hälfte der Fig. 1 bis 4 dargestellten Ausführungsbeispiel sind die Aussparungen 90 nicht mit Siebeinsätzen ausgekleidet, aber durch je eine nach untenragende Schürze 96 rundum begrenzt.

An der Aussenseite des Tauchrohrs 40 sind in gleichmässigen Winkelabständen Lamellen 98 ausgebildet, die in geringem Abstand oberhalb des Ringraumes 45 beginnen und sich bis zu je einer der Längsachsen 92 erstrecken. In radialer Richtung haben die Lamellen 98 an ihrem unteren Ende die Höhe Null und an ihrem oberen Ende eine Höhe, die etwa einem Viertel der Länge der zugehörigen Längsachse 92 entspricht. Die Lamellen 98 können, wie besonders in Fig. 4 und 6 dargestellt, gleichsinnig gewendet sein. In jedem Fall haben die Lamellen 98 ein solches Profil, dass sie nach oben strömendes Gut C von den Aussparungen 90 ablenken.

Beiden dargestellten Ausführungsbeispielen ist gemeinsam, dass im Betrieb ein Gas, beispielsweise erwärmte trockene Luft, von oben in das Tauchrohr 40 eingeleitet wird, dieses mit einer Geschwindigkeit von beispielsweise 20 bis 40 m/s nach unten durchströmt, in der Schüssel 16 um etwa 180° umgelenkt und im Ringraum 45 nach oben geführt wird. Die Strömungsgeschwindigkeit des Gases im engsten Bereich des Ringraumes 45 beträgt mindestens 20 m/s, vorzugsweise zwischen 30 und 60 m/s. Das Gas strömt dann in einem verhältnismässig engen Bereich rings um das Tauchrohr 40 bzw. dessen Ummantelung nach oben und fluidiert zumindest in diesem Bereich das im Behälter 10 enthaltene Gut C. Das nach oben strömende Gut C wird von den Lamellen 98 kanalisiert und, falls diese gewendet sind, in eine schraubenförmige Bewegung versetzt.

Der Abweisschirm 56 wird je nach seiner Gestaltung von einem Teil des Gases umströmt und von dem anderen Teil durchströmt oder von dem gesamten Gas durchströmt. Das Gas verlässt den Behälter 10 durch einen oben angeordneten Gasauslass, während das strömende Gut C vom Abweisschirm 56 nach aussen abgelenkt wird und dann entlang der Wand des Behälters 10 nach unten fliesst, wo es in der Nähe des oberen Randes der Schüssel 16 wieder von dem Gasstrom erfasst und in einem zentralen schlauchartigen Strömungsgebilde nach oben mitgerissen wird. Nach der Behandlung des Gutes C wird der Behälter 10 entleert, indem er bei geöffnetem Behälteroberteil 14 gekippt wird.

## Patentansprüche

1. Fliessbettapparatur zum Mischen, Trocknen, Granulieren, Pelletieren, Lackieren und/oder Dragieren pulvrigen oder körnigen Gutes mit
- einem Behälter (10), der in bezug auf eine zumindest annähernd rotationssymmetrisch ist,
- einem Tauchrohr (40), das von oben her axial in den Behälter (10) hineinragt und an eine Quelle für ein Gas anschliessbar ist,
- einer Schüssel (16), die unterhalb des Tauchrohrs (40) angeordnet ist und das durch das Tauchrohr (40) eintretende Gas nach oben umlenkt, um das Gut (C) im Behälter (10) zu bewegen, insbesondere zu fluidisieren,
- einem Abweisschirm (56), der in einem oberen Bereich des Behälters (10) zumindest annähernd rotationssymmetrisch rings um das Tauchrohr (40) angeordnet ist, um das vom Gas nach oben mitgenommene Gut (C) nach aussen umzulenken,
- und einem Gasauslass, der oberhalb des Abweisschirms (56) angeordnet ist, dadurch gekennzeichnet,
- dass der Abweisschirm (56) ein Gewölbe mit kreisförmigem Scheitel (57) bildet, dessen Scheiteldurchmesser zumindest annähernd dem Mittelwert zwischen den Durchmessern des Tauchrohrs (40) und des oberen Behälterrandes (22) entspricht, und
- dass der Abweisschirm (56) Gasdurchlässe in Form länglicher Aussparungen (90) mit je einer zumindest annähernd radialen Längsachse (92) aufweist.

2. Fliessbettapparatur nach Anspruch 1, dadurch gekennzeichnet, dass die Aussparungen (90) je einen Siebeinsatz (94) enthalten, der entlang der Längsachse (92) der Aussparung (90) V-förmig abgekantet ist.

3. Fliessbettapparatur nach Anspruch 1 oder 2, dadurch gekennzeichnet, dass jede der Aussparungen (90) durch eine nach unten ragende Schürze (96) begrenzt ist.

4. Fliessbettapparatur nach Anspruch 1, dadurch gekennzeichnet, dass nahe der Längsachse (92) jeder der Aussparungen (90) eine Lamelle (98) endet, die sich am Tauchrohr (40) entlang nach oben erstreckt, um das nach oben strömende Gut in die zwischen den Aussparungen (90) liegenden Bereiche des Abweisschirms (56) zu lenken.

5. Fliessbettapparatur nach Anspruch 4, dadurch gekennzeichnet, dass die Lamellen (98) eine längs des Tauchrohrs (40) von unten nach oben allmählich zunehmende radiale Ausdehnung haben.

6. Fliessbettapparatur nach Anspruch 4 oder 5, dadurch gekennzeichnet, dass die Lamellen (98) gewendelt sind.

## Revendications

1. Dispositif à lit fluidisé pour mélanger, sécher, granuler, comprimer en pastilles, émailler et/ou dragéifier un produit pulvérulent ou granuleux, comportant
- un récipient (10) qui, par rapport à un axe (A) du récipient au moins approximativement vertical, est au moins approximativement en symétrie de révolution,
- un tube plongeur (40) qui pénètre axialement d'en haut dans le récipient (10) et que l'on peut relier à une source de gaz,
- une cuve (16) qui est disposée en dessous du tube plongeur (40) et qui renvoie vers le haut le gaz qui pénètre par le tube plongeur (40), pour mettre le produit (C) en mouvement dans le récipient (10), en particulier pour le fluidiser,
- un écran de renvoi (56) disposé dans une zone supérieure du récipient (10), au moins approximativement en symétrie de révolution autour du tube plongeur (40), pour renvoyer vers l'extérieur le produit (C) entraîné vers le haut par le gaz,
- et une sortie de gaz disposée au-dessus de l'écran de renvoi (56), caractérisé
- en ce que l'écran de renvoi (56) forme une voûte à sommet circulaire (57) dont le diamètre du cercle de sommet correspond, au moins approximativement, à la moyenne entre les diamètres du tube plongeur (40) et du bord supérieur du réservoir (22), et
- en ce que l'écran de renvoi (56) présente des passages pour le gaz sous forme d'évidements de forme allongée avec, chacun, un axe longitudinal (92) au moins approximativement radial.

2. Dispositif à lit fluidisé selon la revendication 1, caractérisé en ce que les évidements (90) contiennent chacun une garniture de tamisage (94) repliée en forme de V le long de l'axe longitudinal (92) de l'évidement (90).

3. Dispositif à lit fluidisé selon la revendication 1 ou 2, caractérisé en ce que chacun des évidements (90) est limité par un tablier (96) dirigé vers le bas.

4. Dispositif à lit fluidisé selon la revendication 1, caractérisé en ce que près de l'axe longitudinal (92) de chacun des évidements (90) se termine une lamelle (98) qui s'étend vers le haut le long du tube plongeur (40) pour dévier dans les zones de l'écran de renvoi (56) situées entre les évidements (90) le produit qui s'écoule vers le haut.

5. Dispositif à lit fluidisé selon la revendication 4, caractérisé en ce que les lamelles (98) présentent une extension radiale qui croît progressivement du bas vers le haut le long du tube plongeur (40).

6. Dispositif à lit fluidisé selon la revendication 4 ou 5, caractérisé en ce que les lamelles (98) forment des hélices.

## Claims

1. A fluidized bed apparatus for mixing, drying, granulating, pelleting, coating and/or sugarcoating pulverulent or granular material comprising

— a receptacle (10) which is at least approximately axially symmetrical in relation to an at least approximately perpendicular receptcale axis (A),

— an immersion pipe (40) which extends axially from above into the receptacle (10) and is adapted to be connected to a source for a gas,

— a basin (16) which is disposed below the immersion pipe (40) and reroutes in upwards direction the gas entering through the immersion pipe (40) in order to agitate the material (C) in the receptacle (10) especially to fluidize it,

— a deflector shield (56) which is disposed in an upper region of the receptacle (10) at least approximately axially symmetrically around the immersion pipe (40) in order to reroute towards the outside the material (C) carried upwards by the gas

— and a gas outlet which is disposed above the deflector shield (56) characterized in

— that the deflector shield (56) forms a dome with a circular apex (57) whose apex diameter corresponds to at least approximately the mean value of the diameters of the immersion pipe (40) and of the upper receptacle rim (22), and

— that the deflector shield (56) has gas ports in the form of longitudinal recesses (90) each one of which having an at least approximately radial longitudinal axis (92).

2. The fluidized bed apparatus as defined in claim 1 characterized in that the recesses (90) contain, each, a sieve insert (94) which is chamfered in V-shape along the longitudinal axis (92) of the recess (90).

3. The fluidized bed apparatus as defined in claims 1 or claim 2 characterized in that each recess (90) is limited by a downwardly projecting apron (96).

4. The fluidized bed apparatus as defined in claim 1 characterized in that close to the longitudinal axis (92) of each one of the recesses (90) a lamella (98) ends that extends upwards alongside the immersion pipe (40) in order to reroute the upwardly flowing material into the regions of the deflector shield (56) that lie between the recesses (90).

5. The fluidized bed apparatus as defined in claim 4 characterized in that the lamellae (98) alongside the immersion pipe (40) have a radial extension that gradually increases from down in upwards direction.

6. The fluidized bed apparatus as defined in claims 4 or claim 5 characterized in that the lamellae (98) are helical.

FIG. 1

FIG. 4

FIG. 5

FIG. 2

FIG. 3